# EUROPEAN PATENT SPECIFICATION

(11) **EP 4 130 169 B1**
(45) Date of publication and mention of the grant of the patent: **11.11.2026**
(21) Application number: 22187278.1
(22) Date of filing: 27.07.2022
(51) Int. Cl.: C09D 5/16, C09D 5/18, C08K 3/34, C09D 7/61, C09D 7/40

(54) **MULTIFUNCTIONAL HYDROPHOBIC SURFACE COATINGS FOR INTERIOR APPLICATIONS**
MULTIFUNKTIONALE HYDROPHOBE OBERFLÄCHENBESCHICHTUNGEN FÜR INNENANWENDUNGEN
REVÊTEMENTS DE SURFACE HYDROPHOBES MULTIFONCTIONS POUR DES APPLICATIONS INTÉRIEURES

(30) Priority: 05.08.2021 US 202117395250
(43) Date of publication of application: 08.02.2023
(73) Proprietor: B/E Aerospace, Inc., Winston-Salem, NC 27105 (US)
(72) Inventor: PIMENTEL, Katherine Urena, Manchester, CT (US); POTEET, Steven, Ashland, MA (US)
(74) Representative: Dehns

(56) References cited:
- WO-A1-2012/170832
- US-A1- 2009 005 489
- US-A1- 2018 112 078

## Description

### TECHNICAL FIELD

The present disclosure relates generally to coating compositions for forming protective surface coatings, and more particularly, to hydrophobic coating compositions including nano or micro-particle sized clays for improving fire, smoke, and toxicity (FST) performance, as well as improved resistance to fluids, chemicals and UV light from increased exposure to UV sanitation and cleaning disinfectants.

### BACKGROUND

Safety regulations in the U.S. are determined by the Department of Transportation (DoT). For example, the Federal Aviation Administration (FAA) regulates the safety of aircraft, while the Federal Railroad Administration (FRA) regulates the safety of passenger trains, buses and other land-based people movers. Safety regulations, such as fire safety requirements, determine the types of materials suitable for use in these types of passenger vehicles.

Regarding aircraft materials, to which the present disclosure finds particular application, standards developed by the American Society for Testing and Materials (ASTM) include standard test methods for surface flammability of materials and specific optical density of smoke generated by solid materials. These standards are commonly referred to as flame, smoke and toxicity (FST) requirements, and materials that perform to ASTM FST flame and smoke standards are considered to have flame spread and smoke concentration rates slow enough to permit passengers sufficient time to disembark.

Additives and coatings can be applied to interior surfaces to improve FST performance. For example, flame retardant coatings can be applied to material surfaces to form a barrier between the material surface and the surrounding environment to counteract fire generation and propagation. In addition to improving FST performance, surface coatings are commonly applied to material surfaces to improve cleanability and durability. For example, hydrophobic surface coatings derived from polymers can be applied to improve fluid resistance. In addition to FST performance and cleanability, surface coatings with antimicrobial properties have been developed to mitigate the potential spread of infectious agents. For example, suspensions including antimicrobial agents are commonly used as disinfectants in surface coatings due to their ability to neutralize microbes.

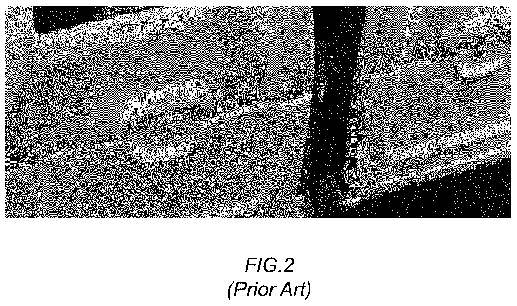

In response to the coronavirus pandemic, airlines and original equipment manufacturers (OEMs) have focused on improving interior hygiene, such as unprecedented use of disinfectants and/or UV sanitation, both of which can damage interior surfaces as illustrated in FIG. 2. While various types of surface coatings are commercially available, there is no commercially available surface coating composition that provides the desired hydrophobicity and resistance to chemicals, fluids, UV, etc. in one singular coating composition. As such, prior art surface coating requires application of multiple layers each having a dedicated function, which is time consuming and costly to apply, and which is difficult to achieve the desired effect because of the layering.

Accordingly, what is needed is a coating composition for forming protective surface coatings that imparts multiple functionalities, thereby obviating the need for having to apply several individual coatings that each serves a different purpose. Relevant background of the invention represent documents WO2012/170832 A1, US2009/005489 A1 and US2018/112078 A1.

### BRIEF SUMMARY

To achieve the foregoing and other advantages, in a first aspect the present disclosure provides a coating composition for forming a surface coating, as defined by claim 1.

In some embodiments, the binder system includes at least one of a curable resin and a solvent, for instance tetrahydrofuran.

In some embodiments, the binder system includes a curable resin selected from the group consisting of epoxy polymers, polyurethanes, alkyds, melamine polymers, phenolic polymers, polyethylenes, polypropylenes, polystyrenes, saturated polyesters, polyamides, polyvinyl compounds, polyisoprenes, polybutadienes, polystyrene-butadienes, individually or in combinations thereof.

In some embodiments, the hydrophobic polymer is polysiloxane.

In some embodiments, the hydrophobic polymer is siloxane.

In some embodiments, the hydrophobic polymer is fluoropolymer.

In some embodiments, the hydrophobic polymer is silane.

In some embodiments, the hydrophobic polymer includes at least one quaternary ammonium group.

In another aspect, the present disclosure provides a method of providing a surface coating on a substrate, as defined by claim 8.

In some embodiments, the method further includes the steps of applying at least one second coating of the coating composition atop the formed surface coating, and allowing the at least one second coating of the applied coating composition to cure or dry to further form the surface coating.

In some embodiments, the binder system comprises at least one of a solvent and a resin.

In some embodiments, hydrophobic polymer includes at least one of polysiloxane, siloxane, fluoropolymer, and silane, and at least one quaternary ammonium group.

In some embodiments, the substrate is part of an aircraft interior component, for instance an aircraft interior component found in a passenger or crew area within a passenger aircraft.

Embodiments of the present disclosure can include or more or any combination of the above features and elements.

This brief summary is provided solely as an introduction to subject matter that is fully described in the detailed description. This brief summary should not be considered to describe essential features nor be used to determine the scope of the claims. Moreover, it is to be understood that both the foregoing summary and the following detailed description are exemplary and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a schematic diagram illustrating the make-up of a multi-functional coating composition for forming a substrate surface coating, in accordance with one or more embodiments of the present disclosure; and
FIG. 2 is a photograph of a worn interior component treated with a surface coating or layered surface coatings according to the prior art.

### DETAILED DESCRIPTION

Before explaining one or more embodiments of the disclosure in detail, it is to be understood that the embodiments are not limited in their application to the details of construction and the arrangement of the components or steps or methodologies set forth in the following description. In the following detailed description of embodiments, numerous specific details may be set forth to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, the present disclosure provides multifunctional coating compositions for forming surface coatings, for instance on interior surfaces of passenger vehicles such as aircraft, to protect the coated surface against degradation caused by exposure to use, wear, cleaning agents, disinfectants, chemicals, fluids and UV, among others, while also imparting antimicrobial resistance and improved FST performance.

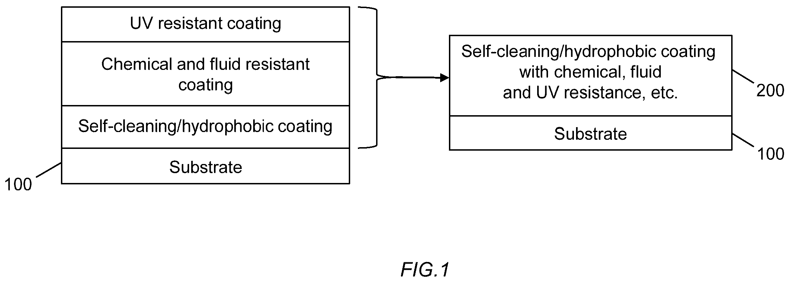

With reference to FIG. 1, in one or more of the embodiments of the present disclosure, the substrate 100 to be surface coated may be any substrate type, for instance a high-contact substrate located in a passenger or crew area of a passenger vehicle such as an aircraft, bus, train, ship, etc. Examples of substrate materials include, but are not limited to, synthetic or natural fabric surfaces, plastics, metals, composites and composite finishes, wood, glass, leather, and other substrates. Substrate environments may include, but are not limited to, passenger cabins, crew quarters, lavatories, and galleys. Other environments may include schools, hospitals, public buildings, etc. In the case of passenger vehicles, the substrate may be an element of a passenger seat, a passenger suite, an interior panel, an overhead bin, a door, a wall, a passenger amenity, a control panel, a passenger service unit, a lavatory fixture, galley equipment, and beverage carts, among others. In some embodiments, the substrate may be an element of a mechanism operable for manipulating another element, for example, a handle, lock, latch, switch, control panel, etc.

In embodiments, the present disclosure provides a multifunctional coating composition 200 for forming substrate surface coatings with functionalities including, but not limited to, self-cleaning, hydrophobicity, fluid resistance, chemical resistance UV resistance, improved FST performance, etc. In some embodiments, the coating composition 200 generally includes a binder system having dispersed hydrophobic polymer and clay particles to form a curable surface coating, for instance a polysiloxane-based surface coating as discussed further below. In some embodiments, the binder system includes at least one of a solvent and a curable resin, with the binder system including from about 10 to 15% by volume of the coating composition, more preferably from about 11 to 13% by volume of the coating composition, and most preferably from about 11.5 to 12.5% by volume of the coating composition. Other volume percentages are envisioned.

In some embodiments, the binder system includes a solvent such as tetrahydrofuran preferable for providing uniform coating thickness and rapid drying, as well as good working viscosity. Aqueous solvents may be preferable to organic solvents for environmental and substrate compatibility reasons. Other solvents such as alcohols may be used.

In some embodiments, the binder system includes a curable resin having functional groups contained in the resin as a curing agent, for instance epoxy polymers, polyurethanes, alkyds, melamine polymers, phenolic polymers, polyethylenes, polypropylenes, polystyrenes, saturated polyesters, polyamides, polyvinyl compounds, polyisoprenes, polybutadienes, polystyrene-butadienes, individually or in combinations thereof. In some embodiments, the coating composition may be a polysiloxane-based aqueous coating composition for room-temperature curing, gloss retention and durability in interior applications. Other composite and ultra-violet (UV) resins are envisioned, for instance, resins that improve the compatibility other resins.

In some embodiments, the coating composition further includes a hydrophobic polymer for increased water repellency and durability of water repellant, as well as resistance to the effects of UV radiation, abrasion and chemical disinfectants. Suitable examples of hydrophobic polymers include, but are not limited to, silicon-based polymers such as polysiloxanes, siloxanes and organofunctional silanes, as well as fluoropolymers, individually or in combinations thereof. In some embodiments, the hydrophobic polymer component includes from about 40 to 80% by volume of the coating composition, more preferably from about 50 to 70% by volume of the coating composition, and most preferably from about 55 to 65% by volume of the coating composition.

Further, a coating composition according to the present disclosure contains clay mineral particulate such as nanoclay filler particles including from about 0.1 to 5% by volume of the coating composition, more preferably from about 0.5 to 3.5% by volume of the coating composition, and most preferably from about 1.5 to 2.5% by volume of the coating composition. In some embodiments, the nanoclay filler particles have a particle diameter ranging from 1 to 25 microns. Examples of nanoclay layered mineral silicates suitable for use in the coating composition include, but are not limited to, montmorillonite, bentonite, kaolinite, hectorite and halloysite, individually or in combinations thereof. In some embodiments, the coating composition includes at least one of montmorillonite and bentonite. In some embodiments, the nanoclay filler particles may be microspheres, surface treated or otherwise.

In some embodiments, the coating composition may further include an antimicrobial component, for instance a quaternary ammonium compound (QAC) or "quat," or other static/non-leachable compound (e.g., silane-functionalized QACs, "SiQuat" or "silquat") configured to attract negatively charged microorganisms to the surface where the microorganisms are neutralized. To an extent, QACs and other such static compounds may covalently bond to the substrates to which they are applied, resulting in sustainable layers of antimicrobial coatings that may persist for extended periods of time (e.g., 12 months or longer). The QACs may be included into the coating composition, either as unbound or functionalized to the surface of the nanoclay through the silane moiety. The details of functionalization of montmorillonite are known to those skilled in the art. In some embodiments, other examples of antimicrobial agents may include, but are not limited to, graphene, TiO₂, silver, copper and alloys thereof.

In another aspect, the present disclosure provides a method for applying a surface coating to a substrate, for instance and interior surface in an aircraft, including the steps of providing a coating composition as discussed above, providing a substrate to be surface coated, applying the coating composition to the surface to be coating, and allowing the applied coating composition to dry or cure to form the surface coating. Additional steps may include applying at least one second surface coat atop the applied first or previous coat and allowing the at least one additional coat to dry or cure.

Coating may include electrostatic spray application, dipping, wiping, brushing, or other common application method. Substrate preparation, prior to coating application, may include one or more of cleaning, etching, heating, etc. In some embodiments, formed surface coating films have a thickness ranging from less than 1 mm to greater than several micrometers, depending on application. The multifunctional aspect of the coating, imparted by the combination of the binder system, hydrophobic polymer, nanoclay particles, and optionally an antimicrobial agent, simplifies coating application while saving costs.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

## Claims

1. A coating composition for forming a surface coating, comprising:
a binder system comprising from 10 to 15% by volume of the coating composition;
hydrophobic polymer comprising from 40 to 80% by volume of the coating composition, the hydrophobic polymer dispersed in the binder system; and
nanoclay filler particles comprising from 0.1 to 5% by volume of the coating composition, the nanoclay filler particles dispersed in the binder system, and the nanoclay filler particles having a particle diameter ranging from 1 to 25 microns;
**characterized in that**:
the coating composition further includes an antimicrobial component including at least one of a quaternary ammonium compound, a silane-functionalized quaternary ammonium compound, graphene, titanium dioxide, silver, and copper; and
wherein the nanoclay filler particles comprise at least one of montmorillonite and bentonite.

2. The coating composition according to claim 1, wherein the binder system comprises at least one of an aqueous solvent and a curable resin.

3. The coating composition according to claim 1 or 2, wherein the hydrophobic polymer comprises polysiloxane.

4. The coating composition according to claim 1 or 2, wherein the hydrophobic polymer comprises siloxane.

5. The coating composition according to claim 1 or 2, wherein the hydrophobic polymer comprises fluoropolymer.

6. The coating composition according to claim 1 or 2, wherein the hydrophobic polymer comprise silane.

7. The coating composition according to claim 1 or 2, wherein the hydrophobic polymer comprises at least one quaternary ammonium group.

8. A method of providing a surface coating on a substrate (100), the method including the steps of:
providing a coating composition comprising:
a binder system comprising from 10 to 15% by volume of the coating composition;
hydrophobic polymer comprising from 40 to 80% by volume of the coating composition, the hydrophobic polymer dispersed in the binder system; and
nanoclay filler particles comprising from 0.1 to 5% by volume of the coating composition, the nanoclay filler particles dispersed in the binder system, and the nanoclay filler particles having a particle diameter ranging from 1 to 25 microns;
providing a substrate (100) to be surface coated;
applying the coating composition to a surface of the substrate; and
allowing the applied coating composition to cure or dry on the surface of the substrate to form the surface coating (200);
**characterized in that**:
the coating composition further includes an antimicrobial component including at least one of a quaternary ammonium compound, a silane-functionalized quaternary ammonium compound, graphene, titanium dioxide, silver, and copper; and
wherein the nanoclay filler particles comprise at least one of montmorillonite and bentonite.

9. The method according to claim 8, further comprising the steps of:
applying at least one second coating of the coating composition atop the formed surface coating; and
allowing the at least one second coating of the applied coating composition to cure or dry to further form the surface coating.

10. The method according to claim 8 or 9, wherein the binder system comprises at least one of a solvent and a curable resin.

11. The method according to claim 8, 9 or 10,, wherein the hydrophobic polymer comprises at least one of polysiloxane, siloxane, fluoropolymer, and silane.

12. The method according to claim 8, 9 or 10, wherein the hydrophobic polymer comprises at least one quaternary ammonium group.

13. The method according to any of claims 8 to 12, wherein the substrate is part of an aircraft interior component.

## Patentansprüche

1. Beschichtungszusammensetzung zum Bilden einer Oberflächenbeschichtung, umfassend:
ein Bindemittelsystem, umfassend 10 bis 15 Vol.-% der Beschichtungszusammensetzung;
hydrophobes Polymer, umfassend 40 bis 80 Vol.-% der Beschichtungszusammensetzung, wobei das hydrophobe Polymer in dem Bindemittelsystem dispergiert ist; und
Nanotonfüllstoffpartikel, umfassend 0,1 bis 5 Vol.-% der Beschichtungszusammensetzung, wobei die Nanotonfüllstoffpartikel in dem Bindemittelsystem dispergiert sind und die Nanotonfüllstoffpartikel einen Partikeldurchmesser im Bereich von 1 bis 25 Mikrometer aufweisen;
**dadurch gekennzeichnet, dass**:
die Beschichtungszusammensetzung ferner eine antimikrobielle Komponente beinhaltet, die mindestens eines von einer quaternären Ammoniumverbindung, einer silanfunktionalisierten quaternären Ammoniumverbindung, Graphen, Titandioxid, Silber und Kupfer beinhaltet; und
wobei die Nanotonfüllstoffpartikel mindestens einen von Montmorillonit und Bentonit umfassen.

2. Beschichtungszusammensetzung nach Anspruch 1, wobei das Bindemittelsystem mindestens eines von einem wässrigen Lösungsmittel und einem härtbaren Harz umfasst.

3. Beschichtungszusammensetzung nach Anspruch 1 oder 2, wobei das hydrophobe Polymer Polysiloxan umfasst.

4. Beschichtungszusammensetzung nach Anspruch 1 oder 2, wobei das hydrophobe Polymer Siloxan umfasst.

5. Beschichtungszusammensetzung nach Anspruch 1 oder 2, wobei das hydrophobe Polymer Fluorpolymer umfasst.

6. Beschichtungszusammensetzung nach Anspruch 1 oder 2, wobei das hydrophobe Polymer Silan umfasst.

7. Beschichtungszusammensetzung nach Anspruch 1 oder 2, wobei das hydrophobe Polymer mindestens eine quaternäre Ammoniumgruppe umfasst.

8. Verfahren zum Bereitstellen einer Oberflächenbeschichtung auf einem Substrat (100), wobei das Verfahren die folgenden Schritte beinhaltet:
Bereitstellen einer Beschichtungszusammensetzung, umfassend:
ein Bindemittelsystem, umfassend 10 bis 15 Vol.-% der Beschichtungszusammensetzung;
hydrophobes Polymer, umfassend 40 bis 80 Vol.-% der Beschichtungszusammensetzung, wobei das hydrophobe Polymer in dem Bindemittelsystem dispergiert ist; und
Nanotonfüllstoffpartikel, umfassend 0,1 bis 5 Vol.-% der Beschichtungszusammensetzung, wobei die Nanotonfüllstoffpartikel in dem Bindemittelsystem dispergiert sind und die Nanotonfüllstoffpartikel einen Partikeldurchmesser im Bereich von 1 bis 25 Mikrometer aufweisen;
Bereitstellen eines an der Oberfläche zu beschichtenden Substrats (100);
Auftragen der Beschichtungszusammensetzung auf eine Oberfläche des Substrats; und
Aushärten- oder Trocknenlassen der aufgetragenen Beschichtungszusammensetzung auf der Oberfläche des Substrats zum Bilden der Oberflächenbeschichtung (200);
**dadurch gekennzeichnet, dass**:
die Beschichtungszusammensetzung ferner eine antimikrobielle Komponente beinhaltet, die mindestens eines von einer quaternären Ammoniumverbindung, einer silanfunktionalisierten quaternären Ammoniumverbindung, Graphen, Titandioxid, Silber und Kupfer beinhaltet; und
wobei die Nanotonfüllstoffpartikel mindestens einen von Montmorillonit und Bentonit umfassen.

9. Verfahren nach Anspruch 8, ferner umfassend die folgenden Schritte:
Auftragen mindestens einer zweiten Beschichtung der Beschichtungszusammensetzung auf die gebildete Oberflächenbeschichtung; und
Aushärten- oder Trocknenlassen der mindestens einen zweiten Beschichtung der aufgetragenen Beschichtungszusammensetzung zum weiteren Bilden der Oberflächenbeschichtung.

10. Verfahren nach Anspruch 8 oder 9, wobei das Bindemittelsystem mindestens eines von einem Lösungsmittel und einem härtbaren Harz umfasst.

11. Verfahren nach Anspruch 8, 9 oder 10, wobei das hydrophobe Polymer mindestens eines von Polysiloxan, Siloxan, Fluorpolymer und Silan umfasst.

12. Verfahren nach Anspruch 8, 9 oder 10, wobei das hydrophobe Polymer mindestens eine quaternäre Ammoniumgruppe umfasst.

13. Verfahren nach einem der Ansprüche 8 bis 12, wobei das Substrat Teil einer Luftfahrzeuginnenraumkomponente ist.

## Revendications

1. Composition de revêtement pour former un revêtement de surface, comprenant :
un système liant comprenant de 10 à 15 % en volume de la composition de revêtement ;
un polymère hydrophobe comprenant de 40 à 80 % en volume de la composition de revêtement, le polymère hydrophobe étant dispersé dans le système liant ; et
des particules de charge de nanoargile comprenant de 0,1 à 5 % en volume de la composition de revêtement, les particules de charge de nanoargile étant dispersées dans le système liant et les particules de charge de nanoargile ayant un diamètre de particules allant de 1 à 25 microns ;
**caractérisée en ce que** :
la composition de revêtement comporte en outre un composant antimicrobien comportant au moins l'un d'un composé d'ammonium quaternaire, d'un composé d'ammonium quaternaire fonctionnalisé par un silane, de graphène, de dioxyde de titane, d'argent et de cuivre ; et
dans laquelle les particules de charge de nanoargile comprennent au moins l'un de montmorillonite et bentonite.

2. Composition de revêtement selon la revendication 1, dans laquelle le système liant comprend au moins l'un d'un solvant aqueux et d'une résine durcissable.

3. Composition de revêtement selon la revendication 1 ou 2, dans laquelle le polymère hydrophobe comprend du polysiloxane.

4. Composition de revêtement selon la revendication 1 ou 2, dans laquelle le polymère hydrophobe comprend du siloxane.

5. Composition de revêtement selon la revendication 1 ou 2, dans laquelle le polymère hydrophobe comprend un fluoropolymère.

6. Composition de revêtement selon la revendication 1 ou 2, dans laquelle le polymère hydrophobe comprend du silane.

7. Composition de revêtement selon la revendication 1 ou 2, dans laquelle le polymère hydrophobe comprend au moins un groupe ammonium quaternaire.

8. Procédé de fourniture d'un revêtement de surface sur un substrat (100), le procédé comportant les étapes de :
fourniture d'une composition de revêtement comprenant :
un système liant comprenant de 10 à 15 % en volume de la composition de revêtement ;
un polymère hydrophobe comprenant de 40 à 80 % en volume de la composition de revêtement, le polymère hydrophobe étant dispersé dans le système liant ; et
des particules de charge de nanoargile comprenant de 0,1 à 5 % en volume de la composition de revêtement, les particules de charge de nanoargile étant dispersées dans le système liant et les particules de charge de nanoargile ayant un diamètre de particules allant de 1 à 25 microns ;
fourniture d'un substrat (100) à revêtir en surface ;
application de la composition de revêtement sur une surface du substrat ; et
le fait de permettre à la composition de revêtement appliquée de durcir ou de sécher sur la surface du substrat pour former le revêtement de surface (200) ;
**caractérisé en ce que** :
la composition de revêtement comporte en outre un composant antimicrobien comportant au moins l'un d'un composé d'ammonium quaternaire, d'un composé d'ammonium quaternaire fonctionnalisé par un silane, de graphène, de dioxyde de titane, d'argent et de cuivre ; et
dans lequel les particules de charge de nanoargile comprennent au moins l'un de montmorillonite et bentonite.

9. Procédé selon la revendication 8, comprenant les étapes de :
application d'au moins un second revêtement de la composition de revêtement au-dessus du revêtement de surface formé ; et
le fait de permettre à l'au moins un second revêtement de la composition de revêtement appliquée de sécher ou durcir pour former davantage le revêtement de surface.

10. Procédé selon la revendication 8 ou 9, dans lequel le système liant comprend au moins l'un d'un solvant et d'une résine durcissable.

11. Procédé selon la revendication 8, 9 ou 10, dans lequel le polymère hydrophobe comprend au moins l'un de polysiloxane, siloxane, fluoropolymère et silane.

12. Procédé selon la revendication 8, 9 ou 10, dans lequel le polymère hydrophobe comprend au moins un groupe ammonium quaternaire.

13. Procédé selon l'une quelconque des revendications 8 à 12, dans lequel le substrat fait partie d'un composant intérieur d'aéronef.
